# EUROPÄISCHE PATENTSCHRIFT

(11) **EP 3 275 628 B1**
(45) Veröffentlichungstag und Bekanntmachung des Hinweises auf die Patenterteilung: **20.03.2019**
(21) Anmeldenummer: 17172786.0
(22) Anmeldetag: 24.05.2017
(51) Int. Cl.: B29C 64/236, B29C 64/245, B33Y 30/00, B22F 3/105

(54) **PULVERMODUL FÜR EINE VORRICHTUNG ZUR ADDITIVEN HERSTELLUNG DREIDIMENSIONALER OBJEKTE**
POWDER MODULE FOR AN APPARATUS FOR ADDITIVE MANUFACTURING OF THREE-DIMENSIONAL OBJECTS
BLOC DE POUDRE POUR UN DISPOSITIF DE FABRICATION ADDITIVE D'OBJETS TRIDIMENSIONNELS

(30) Priorität: 29.07.2016 DE 102016114056
(43) Veröffentlichungstag der Anmeldung: 31.01.2018
(73) Patentinhaber: CL Schutzrechtsverwaltungs GmbH, 96215 Lichtenfels (DE)
(72) Erfinder: HERZOG, Frank, 96215 Lichtenfels (DE); DR. BECHMANN, Florian, 96215 Lichtenfels (DE); Schödel, Frank, 96317 Kronach (DE)
(74) Vertreter: Hafner & Kohl

(56) Entgegenhaltungen:
- EP-A1- 2 156 942
- WO-A1-2015/194398
- WO-A2-2014/020085
- CN-A- 104 908 323

## Beschreibung

Die Erfindung betrifft ein Pulvermodul für eine Vorrichtung zur additiven Herstellung dreidimensionaler Objekte gemäß Anspruch 1. Das offenbarte Pulvermodul umfasst eine einen mit pulverförmigem Baumaterial befüllbaren Pulverraum begrenzende Pulverkammer, eine in dem Pulverraum angeordnete, den Pulverraum bodenseitig begrenzende, relativ zu der Pulverkammer bewegbar gelagerte Trageinrichtung sowie eine Antriebseinrichtung zur Erzeugung einer die Trageinrichtung in eine Bewegung relativ zu der Pulverkammer versetzenden Kraft.

Derartige Pulvermodule sind, etwa in Form von Bau- oder Dosiermodulen, als Funktionskomponenten von Vorrichtungen zur additiven Herstellung dreidimensionaler Objekte bekannt. Bei entsprechenden Pulvermodulen ist eine möglichst exakte sowie zuverlässige Bewegung entsprechender Trageinrichtungen relativ zu entsprechenden Pulverkammern von wesentlicher Bedeutung. Eine möglichst exakte und zuverlässige Bewegung bzw. Steuerung entsprechender Trageinrichtungen ist insbesondere auch für vergleichsweise lange (hohen) Verfahrwege (Hübe) der Trageinrichtungen, d. h. typischerweise Verfahrwegen der Trageinrichtungen oberhalb 500 mm, sicherzustellen. Bisherige in entsprechenden Pulvermodulen eingesetzte Antriebseinrichtungen sind im Hinblick auf Exaktheit und Zuverlässigkeit der über diese realisierbaren bzw. realisierten Bewegungen der Trageinrichtungen verbesserungs- bzw. weiterentwicklungswürdig.

WO 2015/194398 A1 offenbart eine Vorrichtung zur additiven Herstellung dreidimensionaler Objekte mit einem in einem Bauraum angeordneten über einen Antrieb höhenverstellbaren Tisch.

EP 2 156 942 A1 offenbart ebenso eine Vorrichtung zur additiven Herstellung dreidimensionaler Objekte mit einem in einem Bauraum angeordneten über einen Antrieb höhenverstellbaren Tisch.

WO 2014/020085 A2 offenbart ebenso eine Vorrichtung zur additiven Herstellung dreidimensionaler Objekte mit einem in einem Bauraum angeordneten über einen Antrieb höhenverstellbaren Tisch.

Der Erfindung liegt damit die Aufgabe zugrunde, ein, insbesondere im Hinblick auf Exaktheit und Zuverlässigkeit der über die Antriebseinrichtung realisierten Bewegungen der Trageinrichtung, verbessertes Pulvermodul für eine Vorrichtung zur additiven Herstellung dreidimensionaler Objekte anzugeben.

Die Aufgabe wird durch ein Pulvermodul für eine Vorrichtung zur additiven Herstellung dreidimensionaler Objekte gemäß Anspruch 1 gelöst. Die hierzu abhängigen Ansprüche betreffen mögliche Ausführungsformen des Pulvermoduls.

Das hierin beschriebene Pulvermodul stellt eine Funktionskomponente einer Vorrichtung zur additiven Herstellung dreidimensionaler Objekte dar. Eine entsprechende Vorrichtung ist zur additiven Herstellung wenigstens eines dreidimensionalen Objekts (im Weiteren abgekürzt als "Objekt" bezeichnet) durch sukzessive schichtweise selektive Belichtung und damit einhergehende Verfestigung einzelner Baumaterialschichten aus einem verfestigbaren pulverförmigen Baumaterial (im Weiteren abgekürzt als "Baumaterial" bezeichnet) vermittels wenigstens eines Energiestrahls eingerichtet. Bei dem Baumaterial kann es sich um ein Metall-, Kunststoff- und/oder Keramikpulver handeln. Unter einem Metall-, Kunststoff- oder Keramikpulver kann auch ein Pulvergemisch unterschiedlicher Metalle, Kunststoffe oder Keramiken verstanden werden. Bei dem Energiestrahl kann es sich um einen Laserstrahl handeln. Bei der Vorrichtung kann es sich entsprechend um eine Vorrichtung zur Durchführung selektiver Laserschmelzverfahren (abgekürzt SLM-Verfahren) oder selektiver Lasersinterverfahren (abgekürzt SLS-Verfahren), d. h. um eine selektive Laserschmelzvorrichtung (SLM-Vorrichtung) bzw. eine selektive Lasersintervorrichtung (SLS-Vorrichtung) handeln.

Bei dem Pulvermodul kann es sich im Allgemeinen um jedwedes Pulvermodul handeln, welches zur Aufnahme und/oder Abgabe von Baumaterial eingerichtet ist. Im Besonderen kann es sich bei dem Pulvermodul um ein Baumodul, in welchem der eigentliche additive Aufbau dreidimensionaler Objekte erfolgt und welches hierfür im Rahmen der Durchführung additiver Herstellungsprozesse sukzessive schichtweise mit selektiv zu verfestigendem Baumaterial befüllt wird, um ein Dosiermodul, über welches im Rahmen der Durchführung additiver Herstellungsprozesse sukzessive schichtweise Baumaterial in eine Prozesskammer dosiert wird, oder um ein Auffangmodul, welches im Rahmen der Durchführung additiver Herstellungsprozesse mit nicht verfestigtem Baumaterial befüllt wird, handeln.

Das Pulvermodul umfasst eine Pulverkammer. Die Pulverkammer begrenzt einen mit Baumaterial befüllbaren Pulverraum. Der Pulverraum ist zumindest seitlich durch Wandungen (Pulverkammerwandungen) der in der Regel hohlquaderartig bzw. hohlzylinderartig ausgebildeten Pulverkammer begrenzt.

Bodenseitig ist der Pulverraum durch eine Trageinrichtung begrenzt. Die Trageinrichtung kann einen tischartigen Grundkörper und wenigstens ein, insbesondere mehrere, plattenartige bzw. -förmige, insbesondere stapelartig, auf dem Grundkörper angeordnete oder ausgebildete Auflagekörper umfassen. Jeweilige Auflagekörper können unterschiedlich funktionalisiert sein. Bei entsprechenden Auflagekörpern kann es sich z. B. um eine Bauplatte, einen Heizkörper und einen (thermischen) Isolierkörper handeln. Zwischen unmittelbar benachbarten Auflagekörpern können zumindest abschnittsweise Dichtelemente angeordnet oder ausgebildet sein.

Die Trageinrichtung ist, typischerweise zwischen zwei Endstellungen, d. h. zwischen einer (bezogen auf die Höhe des Pulvermoduls) oberen und einer unteren Endstellung, relativ zu der Pulverkammer bewegbar gelagert. Die bewegbare Lagerung der Trageinrichtung ermöglicht die Realisierung einer, insbesondere linearen, Bewegung der Trageinrichtung entlang einer vertikalen Bewegungsachse bzw. in einer vertikalen Bewegungsrichtung. Der maximale Verfahrweg der Trageinrichtung kann zwischen 800 und 2000 mm, insbesondere zwischen 950 und 1050 mm, liegen.

Die bewegbare Lagerung der Trageinrichtung ist durch eine mit dieser gekoppelte Antriebseinrichtung realisiert. Die Antriebseinrichtung ist zur Ausbildung bzw. Erzeugung einer die Trageinrichtung in eine entsprechende Bewegung relativ zu der Pulverkammer versetzenden Kraft (Antriebskraft) eingerichtet. Die Antriebseinrichtung kann z. B. (elektro)mechanisch, hydraulisch oder pneumatisch ausgebildet sein.

Wesentlich an der Antriebseinrichtung ist, dass diese wenigstens zwei gesonderte Stelleinheiten umfasst. Die auch als Stellaktoren zu bezeichnenden bzw. zu erachtenden Stelleinheiten sind typischerweise parallel nebeneinander angeordnet. Die Stelleinheiten können typischerweise bewegungsgekoppelt sein. Die Stelleinheiten werden typischerweise gleichförmig bzw. synchron betrieben.

Jede Stelleinheit umfasst wenigstens ein Stellelement. Die stelleinheitseitigen Stellelemente sind typischerweise parallel nebeneinander angeordnet. Jedes Stellelement ist relativ zu einem jeweiligen Gehäuseelement bzw. -teil der jeweiligen Stelleinheit, in welchem diverse Komponenten der jeweiligen Stelleinheit angeordnet oder ausgebildet sind, zwischen einer ersten Endstellung und einer zweiten Endstellung, und umgekehrt, bewegbar gelagert. Die erste Endstellung kann einer (vollständig) aus dem Gehäuseelement ausgefahrenen Endstellung des jeweiligen Stellelements, die zweite Endstellung kann einer (vollständig) in das Gehäuseelement eingefahrenen Endstellung des jeweiligen Stellelements entsprechen. In der ersten Endstellung des Stellelements ist die Trageinrichtung typischerweise in ihre obere Endstellung bewegt; die erste Endstellung des Stellelements entspricht sonach typischerweise der oberen Endstellung der Trageinrichtung. In der zweiten Endstellung des Stellelements ist die Trageinrichtung typischerweise in ihre untere Endstellung bewegt; die zweite Endstellung des Stellelements entspricht sonach typischerweise der unteren Endstellung der Trageinrichtung.

Ein jeweiliges Stellelement kann eine zylinderartige bzw. -förmige geometrische Grundform aufweisen. Bei einem jeweiligen Stellelement kann es sich um einen einfachen Stellzylinder handeln. Alternativ kann es sich bei einem jeweiligen Stellelement um einen Teleskopzylinder handeln, welcher mehrere ineinander relativ zu einander bewegbar angeordnete Stellelementabschnitte umfasst. Diese teleskopartige bzw. -förmige Ausbildung eines Stellelements ist insbesondere im Hinblick auf die Realisierung vergleichsweise großer Verfahrwege (Hübe), d. h. insbesondere Verfahrwege von wenigstens 500 mm, der Trageinrichtung zweckmäßig. Die teleskopartige bzw. -förmige Ausbildung eines Stellelements ermöglicht zudem eine, insbesondere im Hinblick auf den mit diesem realisierbaren (maximalen) Verfahrweg (Hub), äußerst kompakt Bauweise. Die kompakte Bauweise der Antriebseinrichtung trägt dem üblicherweise engen Platz- bzw. Raumangebot in einem entsprechenden Pulvermodul Rechnung.

Die beschriebene Antriebseinrichtung ermöglicht eine exakte und zuverlässige Realisierung bzw. Steuerung von Bewegungen der Trageinrichtung. Durch den Einsatz einer entsprechenden Antriebseinrichtung liegt insgesamt ein im Hinblick auf Exaktheit und Zuverlässigkeit der über die Antriebseinrichtung realisierten Bewegungen der Trageinrichtung verbessertes Pulvermodul vor. Gleichermaßen ist die beschriebene Antriebseinrichtung, insbesondere im Hinblick auf die mit dieser realisierbaren (maximalen) Verfahrwege (Hübe), äußerst kompakt aufgebaut. Die Antriebseinrichtung bzw. das Pulvermodul lässt sich ohne weiteres in bestehende Anlagen- bzw. Maschinenkonstruktion von Vorrichtungen zur additiven Herstellung dreidimensionaler Objekte integrieren; es ist trotz der vermittels der Antriebseinrichtung realisierbaren großen Hübe typischerweise keine Änderung der Anlagen- bzw. Maschinenkonstruktion erforderlich.

Jede Stelleinheit umfasst wenigstens ein erstes, zwischen einer ersten Endstellung und einer zweiten Endstellung bewegbar gelagertes, insbesondere teleskopartiges, Stellelement sowie wenigstens ein zweites, zwischen einer ersten Endstellung und einer zweiten Endstellung bewegbar gelagertes, insbesondere teleskopartiges, Stellelement. Ein jeweiliges erstes Stellelement ist typischerweise mit der Trageinrichtung koppelbar oder gekoppelt, ein jeweiliges zweites Stellelement ist typischerweise mit einer die Pulverkammer lagernden Lager- oder Stützstruktur des Pulvermoduls koppelbar oder gekoppelt.

Die Ausbildung der Stelleinheiten mit mehreren Stellelementen erlaubt eine Vergrößerung der mit der jeweiligen Stelleinheit realisierbaren Verfahrwege. Die jeweiligen stelleinheitseitigen Stellelemente können je nach Umsetzung der Kopplung mit wenigstens einer der Antriebseinrichtung zugehörigen Antriebseinheit synchron oder asynchron zwischen ihren jeweiligen Endstellungen bewegt werden. Die Bewegungen der stelleinheitseitigen Stellelemente können gleich oder unterschiedlich gerichtet sein. Der mit einer jeweiligen Stelleinheit insgesamt realisierbare Verfahrweg (Gesamthub) ergibt sich sonach aus der Summe der vermittels der der Stelleinheit zugehörigen Stellelemente realisierbaren Teilverfahrwege (Teilhübe) zwischen deren jeweiligen ersten und zweiten Endstellungen. Die Stellelemente einer Stelleinheit sind in Serie geschaltet, d. h. in einer gemeinsamen (vertikalen) Achse, welche typischerweise parallel zu der (vertikalen) Bewegungsachse der Trageinrichtung verläuft, angeordnet und ausgerichtet.

Dass der Antriebseinrichtung wenigstens eine Antriebseinheit zugehörig ist, wurde vorstehend erwähnt. Die Antriebseinheit, welche typischerweise als Antriebsmotor ausgebildet ist oder wenigstens einen solchen umfasst, ist zur Erzeugung der die Trageinrichtung in eine Bewegung relativ zu der Pulverkammer versetzenden Kraft eingerichtet. Die von der Antriebseinheit erzeugte Kraft wird über geeignete Kraftübertragungselemente, d. h. z. B. Riemen, Triebe, etc., auf die jeweiligen Stelleinheiten bzw. die jeweiligen stelleinheitseitigen Stellelemente übertragen, um jene zwischen deren jeweiligen Endstellungen zu bewegen. Ein konkretes Beispiel für eine Anordnung entsprechender Kraftübertragungselemente sieht einen zwischen der Antriebseinheit und einem stelleinheitseitigen Stelltrieb, z. B. in Form eines Gewindetriebs, insbesondere eines Spindel- bzw. Kugelgewindetriebs, geschalteten Kraftübertragungsriemen vor. Der Kraftübertragungsriemen ist typischerweise mit der Abtriebsseite der Antriebseinheit und der Antriebsseite des stelleinheitseitigen Stelltriebs gekoppelt.

Weiter oben wurde bereits erwähnt, dass die wenigstens zwei Stelleinheiten typischerweise parallel nebeneinander angeordnet sind. Die Stelleinheiten können über wenigstens eine Querverbindungsstruktur, bei welcher es sich z. B. um einen Querträger bzw. ein Querjoch handeln kann, miteinander verbunden sein. Selbstverständlich können die Stelleinheiten auch über mehrere parallel angeordnete Querverbindungsstrukturen miteinander verbunden sein. Die wenigstens zwei Stelleinheiten können z. B. über wenigstens eine erste Querverbindungsstruktur (mittlere Querverbindungsstruktur) im Bereich eines jeweiligen stelleinheitseitigen Gehäuseelements miteinander verbunden sein. Über eine optionale zweite Querverbindungsstruktur (obere Querverbindungsstruktur) können die Stelleinheiten im Bereich deren jeweiliger erster Stellelemente, insbesondere im Bereich deren jeweiliger freier Enden, miteinander verbunden sein. Die zweite Querverbindungsstruktur kann gleichermaßen eine Ankopplungsstruktur zur Kopplung der Antriebseinrichtung mit der Trageinrichtung bilden. Über eine optionale dritte Querverbindungsstruktur können die Stelleinheiten im Bereich deren jeweiliger zweiter Stellelemente, insbesondere im Bereich deren freier Enden, miteinander verbunden sein. Die dritte Querverbindungsstruktur kann gleichermaßen eine Ankopplungsstruktur zur Kopplung der Antriebseinrichtung mit der die Pulverkammer lagernden, insbesondere rahmenartigen, Lagerstruktur bilden.

Die jeweiligen Querverbindungsstruktur können die Stelleinheiten entsprechend im Bereich eines jeweiligen stelleinheitseitigen Gehäuseelements bzw. im Bereich der jeweiligen stelleinheitseitigen Stellelemente miteinander verbinden und entsprechend an den jeweiligen stelleinheitseitigen Gehäuseelementen bzw. den jeweiligen stelleinheitseitigen Stellelementen angekoppelt sein. Jeweilige Querverbindungsstrukturen erhöhen die mechanische Stabilität, insbesondere die Steifigkeit, der gesamten Antriebseinrichtung. Gleichermaßen bietet eine Querverbindungsstruktur, d. h. insbesondere eine die Stelleinheiten im Bereich eines jeweiligen stelleinheitseitigen Gehäuseelements miteinander verbindende Querverbindungsstruktur, eine Möglichkeit für eine kompakte Anordnung der Antriebseinheit; die Antriebseinheit kann, insbesondere mittig zwischen den wenigstens zwei Stelleinheiten, an der Querverbindungsstruktur angeordnet sein. Eine entsprechende Querverbindungsstruktur kann zumindest abschnittsweise hohl ausgebildet sein, sodass diese zur Aufnahme der erwähnten Kraftübertragungselemente eingerichtet ist.

Zur Abdichtung der Antriebseinrichtung, insbesondere gegenüber dem Eindringen von Baumaterial, kann das Pulvermodul ein in wenigstens einer Richtung verlängerbares, insbesondere faltenbalgartig ausgebildetes, Dichtelement umfassen. Das Dichtelement ist sich in vertikaler Richtung zwischen der Trageinrichtung und der Pulverkammer oder einem bodenseitig an der Pulverkammer ansetzenden Pulverkammeranschlussbauteil angeordnet oder ausgebildet. Bei dem Pulverkammeranschlussbauteilt kann es sich um ein Aufnahmeelement, welches einen zur Aufnahme von Baumaterial eingerichteten, eine Strömungskanalstruktur umfassenden Aufnahmebereich begrenzt, handeln.

Das Pulvermodul weist typischerweise mehrere Komponenten auf, welche im Betrieb mit Daten und/oder Energie zu versorgen sind. Zu entsprechenden Komponenten zählen beispielsweise die Antriebseinheit sowie die Trageinrichtung, d. h. insbesondere ein einen Bestandteil der Trageinrichtung bildender Heizkörper. Entsprechend umfasst das Pulvermodul Daten- und/oder Versorgungsleitungen zur, insbesondere datenmäßigen und/oder elektrischen, Versorgung von, insbesondere datenmäßig und/oder elektrisch, zu versorgenden Komponenten des Pulvermoduls. Über entsprechende Versorgungsleitungen können je nach konkreter Ausgestaltung (elektrische) Energie und/oder Daten, wobei es sich insbesondere um Steuersignale bzw. -parameter handelt, geleitet werden. Sofern erforderlich, ist es möglich, dass durch Versorgungsleitungen hydraulische oder pneumatische Arbeitsfluide geleitet werden; entsprechende Versorgungsleitungen können z. B. als Versorgungsschläuche ausgebildet sein bzw. solche umfassen.

Die Versorgungsleitungen können in einer mehrere, insbesondere gelenkig, miteinander verbundene Führungselemente umfassenden, insbesondere kettenartigen, Führungseinrichtung geführt angeordnet sein. Es handelt sich hierbei um eine besonders kompakte und im Hinblick auf deren Handhabbarkeit praktikable Anordnung der Versorgungsleitungen. Bei der Führungseinrichtung kann es sich insbesondere um eine mehrgliedrige, offen oder geschlossen ausgeführte längliche Energiekette handeln.

Das Pulvermodul kann selbstverständlich mehrere entsprechende Führungseinrichtungen umfassen. Eine erste Führungseinrichtung kann über einen ersten Befestigungsbereich an der Trageinrichtung und über einen zweiten Befestigungsbereich an einer an einem unbeweglichen Teil des Pulvermoduls, insbesondere an einer an einem unbeweglichen Teil des Pulvermoduls angeordneten Tragstruktur, befestigt sein. Die erste Führungseinrichtung kann sich zumindest in einer Grundstellung zickzackartig zwischen dem ersten Befestigungsbereich und dem zweiten Befestigungsbereich erstrecken. Eine zweite Führungseinrichtung kann über einen ersten Befestigungsbereich an der Antriebseinrichtung und über einen zweiten Befestigungsbereich an einer an einem unbeweglichen Teil des Pulvermoduls, insbesondere an einer an einem unbeweglichen Teil des Pulvermoduls angeordneten Tragstruktur, befestigt sein. Die zweite Führungseinrichtung kann sich - analog der ersten Führungseinrichtung - zumindest in einer Grundstellung zickzackartig zwischen dem ersten Befestigungsbereich und dem zweiten Befestigungsbereich erstrecken. Die jeweilige Grundstellung entspricht typischerweise der unteren Endstellung der Trageinrichtung. Bei dem unbeweglichen Teil des Pulvermoduls kann es sich jeweils z. B. um die bereits erwähnte, die Pulverkammer lagernde Lagerstruktur des Pulvermoduls handeln.

Es wurde erwähnt, dass der maximale Verfahrweg (Hub) der Trageinrichtung zwischen 800 und 2000 mm, insbesondere zwischen 950 und 1050 mm, liegen kann. Entsprechend große Verfahrwege der Trageinrichtung erfordern eine entsprechende hoch ausgebildete Pulverkammer. Hierzu kann die Pulverkammer bzw. ein den Pulverraum begrenzender Pulverkammergrundkörper segmentiert ausgebildet sein. Der Pulverkammergrundkörper kann in mehrere unter Ausbildung des Pulverkammergrundkörpers aneinander befestigbare oder befestigte Pulverkammergrundkörpersegmente segmentiert ausgebildet sein. Durch stapelartige Anordnung jeweiliger Pulverkammergrundkörpersegmente können prinzipiell beliebig hohe Pulverkammern und sonach beliebig hohe Bauhöhen realisiert werden. Die Segmentierung ist insbesondere für die Ausbildung des Pulvermoduls als Baumodul relevant.

Die Segmentierung des Pulverkammergrundkörpers in die Pulverkammergrundkörpersegmente erfolgt je nach Anzahl der Pulverkammergrundkörpersegmente in wenigstens einer, gegebenenfalls mehreren, Segmentierungsebenen. Eine jeweilige Segmentierungsebene kann grundsätzlich beliebig im Raum stehen; entsprechende Pulverkammergrundkörpersegmente können prinzipiell in horizontaler und/oder vertikaler Ausrichtung angeordnet sein. Auch bezüglich einer horizontalen oder vertikalen Referenzebene geneigte Segmentierungsebenen sind prinzipiell denkbar.

Die jeweiligen Pulverkammergrundkörpersegmente sind in ihren geometrischkonstruktiven Abmessungen so gewählt, dass diese jeweils in einem Arbeitsgang gefertigt werden können. Der bis dato problematischen Fertigung vergleichsweise hoher Pulver- bzw. Baukammern, d. h. insbesondere Pulverkammern, deren Pulverraum eine maximale Höhe von wenigstens 500 mm überschreitet, d. h. gegebenenfalls 1000 mm oder mehr beträgt, mit den geforderten engen Toleranzen wird sonach durch eine Segmentierung der Pulverkammer in mehrere, unter Ausbildung des Pulverkammergrundkörpers aneinander befestigbare bzw. im Montagezustand der Pulverkammer aneinander befestigte Pulverkammergrundkörpersegmente begegnet.

Durch die Möglichkeit der Befestigung jeweiliger Pulverkammergrundkörpersegmente aneinander lassen sich grundsätzlich beliebig hohe Pulverkammern ausbilden. Dies gilt selbstverständlich insbesondere für den Fall der stapelartigen vertikalen Anordnung bzw. Befestigung jeweiliger Pulverkammergrundkörpersegmente übereinander. Hieraus ergibt sich, dass der Pulverkammergrundkörper vorzugsweise in wenigstens einer horizontalen Segmentierungsebene segmentiert ausgebildet ist, wobei die jeweiligen Pulverkammergrundkörpersegmente bei Segmentierung in der horizontalen Segmentierungsebene in vertikaler bzw. vertikal benachbarter Anordnung übereinander aneinander befestigbar oder befestigt sind.

Die jeweiligen Pulverkammergrundkörpersegmente können eine (hohl)quaderartige bzw. -förmige, hohlzylinderartige bzw. -förmige oder ringscheibenartige bzw. -förmige Grundform aufweisen. Die Pulverkammergrundkörpersegmente umfassen sonach jeweils einen deren jeweilige Grundform (mit)definierenden, durch jeweilige pulverkammergrundkörpersegmentseitige Wandungen begrenzten Innenraum. Der jeweilige pulverkammergrundkörpersegmentseitige Innenraum bildet (im Montagezustand der Pulverkammer) einen Teil des Pulverraums. Jedes Pulverkammergrundkörpersegment begrenzt sonach typischerweise einen einen vollen Innenumfang des Pulverraums beschreibenden Pulverraumabschnitt.

Grundsätzlich können die Pulverkammergrundkörpersegmente in geometrisch-konstruktiver identisch ausgebildet sein oder sich in wenigstens einem geometrischkonstruktiven Parameter, insbesondere deren jeweiliger Höhe, unterscheidend ausgebildet sein. In geometrisch-konstruktiver Hinsicht kann die Pulverkammer sonach (mehrere) identische Pulverkammergrundkörpersegmenten oder (mehrere) unterschiedliche Pulverkammergrundkörpersegmenten umfassen. Die geometrischkonstruktiven Abmessungen der jeweiligen Pulverkammergrundkörpersegmente können insbesondere im Hinblick auf die Realisierung einer bestimmten Sollhöhe der Pulverkammer bzw. des Pulverraums gewählt werden.

Zur Befestigung - die Befestigung ist typischerweise (beschädigungs- bzw. zerstörungsfrei) lösbar - jeweils zur Ausbildung des Pulverkammergrundkörpers aneinander zu befestigender bzw. befestigter Pulverkammergrundkörpersegmente kann an jedem Pulverkammergrundkörpersegment wenigstens ein Befestigungselement angeordnet oder ausgebildet sein. Die jeweiligen Befestigungselemente sind eingerichtet, unter Ausbildung einer (lösbaren) Befestigung wenigstens zweier miteinander zur Ausbildung des Grundkörpers zu verbindender oder verbundener Pulverkammergrundkörpersegmente zusammenzuwirken. Dabei können die jeweiligen Befestigungselemente insbesondere eingerichtet sein, unter Ausbildung einer Befestigung wenigstens zweier miteinander zur Ausbildung des Grundkörpers zu verbindender oder verbundener Pulverkammergrundkörpersegmente form- und/oder kraftschlüssig zusammenzuwirken. Hierunter ist insbesondere zu verstehen, dass die jeweiligen Befestigungselemente eingerichtet sind, miteinander unter Ausbildung einer form- und/oder kraftschlüssigen Verbindung zusammenzuwirken bzw. eingerichtet sind, eine solche auszubilden.

Bei entsprechenden Befestigungselementen kann es sich sonach um, gegebenenfalls korrespondierende, Formschlusselemente, welche eingerichtet sind, unter Ausbildung einer formschlüssigen Verbindung zusammenzuwirken bzw. eingerichtet sind, eine solche herzustellen, oder um, gegebenenfalls korrespondierende, Kraftschlusselemente, welche eingerichtet sind, unter Ausbildung einer kraftschlüssigen Verbindung zusammenzuwirken bzw. eingerichtet sind, eine solche herzustellen, handeln. Entsprechende Formschlusselemente können konkret z. B. als Vorsprung und hierzu (korrespondierende) Aufnahme bzw. Ausnehmung ausgebildet sein. Mithin kann sich durch das Zusammenwirken entsprechender Formschlusselemente z. B. eine Nut-Feder-Verbindung bzw. einer Verbindung nach Art einer solchen ausbilden lassen. Entsprechende Kraftschlusselemente können konkret z. B. als Bolzen bzw. Passstifte und hierzu (korrespondierende), gegebenenfalls mit einem Gegengewinde versehene, Aufnahmen bzw. Ausnehmungen ausgebildet sein. Mithin kann sich durch das Zusammenwirken entsprechender Kraftschlusselemente z. B. eine Bolzen- bzw. Passstift-Verbindung bzw. eine Verbindung nach Art einer solchen ausbilden lassen.

Für die Variante, gemäß welcher die jeweiligen Befestigungselemente eingerichtet sind, unter Ausbildung einer Befestigung wenigstens zweier miteinander zur Ausbildung des Grundkörpers zu verbindender oder verbundener Pulverkammergrundkörpersegmente kraftschlüssig zusammenzuwirken, ist es denkbar, dass die jeweiligen Befestigungselemente als zumindest abschnittsweise von einem Befestigungsbolzen durchsetzbare, insbesondere bohrungsartige, Befestigungsaufnahmen bzw. -ausnehmungen ausgebildet sind und im aneinander befestigten Zustand zumindest abschnittsweise von einem entsprechenden Befestigungsbolzen durchsetzt sind. Bei einem Befestigungsbolzen kann es sich um einen Gewinde- bzw. Schraubbolzen handeln. Eine Befestigungsaufnahme bzw. - ausnehmung eines ersten Pulverkammergrundkörpersegments ist dabei als Durchgangsbohrung ausgebildet, eine Befestigungsaufnahme bzw. -ausnehmung eines mit dem ersten Pulverkammergrundkörpersegment zu verbindenden zweiten Pulverkammergrundkörpersegments kann als Sackbohrung ausgebildet sein. Um jeweilige Pulverkammergrundkörpersegmente beliebig handzuhaben, kann jedes Pulverkammergrundkörpersegment im Bereich eines (oberen) ersten Randbereichs mit einer Durchgangsbohrung und im Bereich eines dieser gegenüber liegend angeordneten oder ausgebildeten (unteren) ersten Randbereichs mit einer Sackbohrung versehen sein.

Jeweilige Befestigungsaufnahmen bzw. -ausnehmungen können dabei in einem (querschnittlich betrachtet) verjüngten Aussparungsbereich des jeweiligen Pulverkammergrundkörpersegments angeordnet oder ausgebildet sein, sodass diese die Außenabmessungen des jeweiligen Pulverkammergrundkörpersegments bzw. der gesamten Pulverkammer nicht erweitern.

Bei den Pulverkammergrundkörpersegmenten handelt es sich typischerweise um spanend, d. h. insbesondere gefräst, gefertigte metallische Bauteile. Denkbar ist gleichwohl auch eine Fertigung der Pulverkammergrundkörpersegmente mittels Drahterodierens bzw. Drahtschneidens.

Bei dem die Pulverkammergrundkörpersegmente bildenden metallischen Material kann es sich um ein Leichtmetall, insbesondere um Aluminium bzw. eine Aluminiumlegierung, handeln. Leichtmetalle zeichnen sich neben einem vergleichsweise geringen Gewicht in fertigungstechnischer Hinsicht durch eine vergleichsweise einfache (spanende) Bearbeitbarkeit aus.

Die geometrisch-konstruktive Dimensionierung der Pulverkammer bzw. des Pulverraums ist zweckmäßig für die additive Fertigung vergleichsweise großer bzw. länglicher Bauteile bzw. Bauteilstrukturen ("Großstrukturen") ausgelegt. Hierbei kann es sich z. B. um Komponenten eines Kraftfahrzeugs, d. h. Karosseriestrukturen, wie Türstrukturen, handeln. Der Pulverraum kann hierfür z. B. eine maximale Tiefe von 1400 mm, insbesondere in einem Bereich zwischen 800 und 2000 mm, aufweisen. Selbstverständlich sind hier Abweichungen nach oben und unten möglich.

Neben dem Pulvermodul betrifft die Erfindung auch eine Vorrichtung zur additiven Herstellung dreidimensionaler Objekte. Die Vorrichtung, bei welcher es sich insbesondere um eine SLS- oder SLM-Vorrichtung handelt, zeichnet sich dadurch aus, sie wenigstens ein wie beschriebenes Pulvermodul umfasst. Sämtliche Ausführungen im Zusammenhang mit dem Pulvermodul gelten sonach analog für die Vorrichtung.

Die Erfindung ist anhand eines Ausführungsbeispiels in den Zeichnungsfiguren näher erläutert. Dabei zeigen:
- Fig. 1-3: je eine Prinzipdarstellung eines Pulvermodul gemäß einem Ausführungsbeispiel; und
- Fig. 4, 5: je eine Prinzipdarstellung einer Antriebseinrichtung gemäß einem Ausführungsbeispiel.

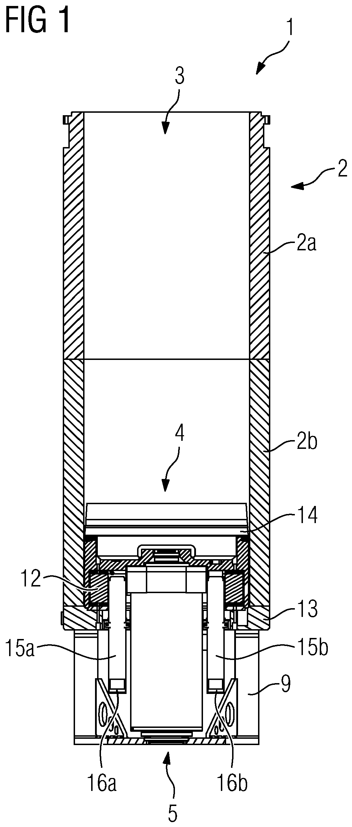

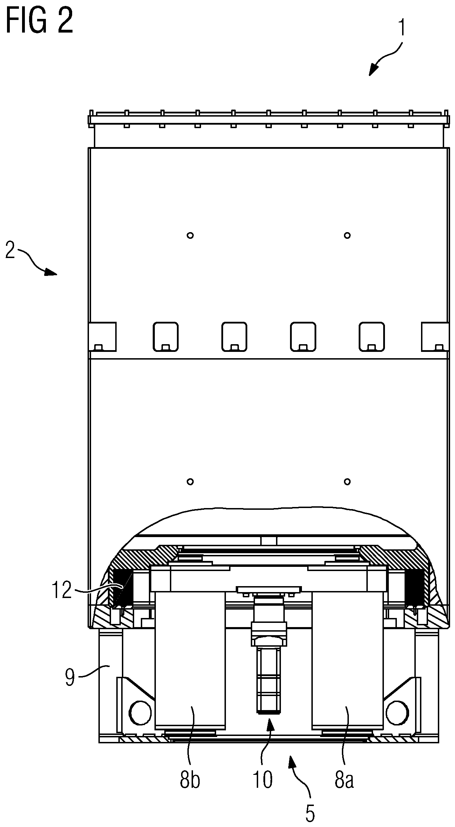

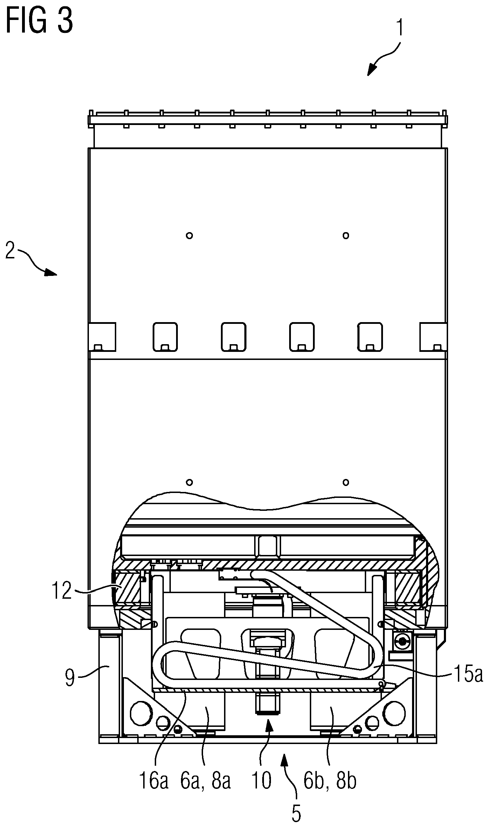

Fig. 1 zeigt eine Prinzipdarstellung eines Pulvermoduls 1 gemäß einem Ausführungsbeispiel in einer (längs)geschnittenen Ansicht. Fig. 2 zeigt das Pulvermodul 1 in einer teilweise aufgebrochenen, im Vergleich zu Fig. 1 um 90° gedrehten Darstellung. Fig. 3 zeigt das Pulvermodul 1 in einer teilweise aufgebrochenen, im Vergleich zu Fig. 2 um 180° gedrehten Darstellung.

Das Pulvermodul 1 stellt eine Funktionskomponente einer Vorrichtung (nicht gezeigt) zur additiven Herstellung dreidimensionaler Objekte dar. Eine entsprechende Vorrichtung ist zur additiven Herstellung wenigstens eines Objekts durch sukzessive schichtweise selektive Belichtung und damit einhergehende Verfestigung einzelner Baumaterialschichten aus einem verfestigbaren Baumaterial (nicht gezeigt) vermittels wenigstens eines Energiestrahls (nicht gezeigt) eingerichtet. Bei dem verfestigbaren Baumaterial kann es sich z. B. um ein Metallpulver handeln. Unter einem Metallpulver kann auch ein Pulvergemisch unterschiedlicher Metalle verstanden werden. Für ein Metallpulver gilt insofern, dass es sich hierbei auch um ein Pulver aus wenigstens einer Metalllegierung handeln kann. Bei dem Energiestrahl kann es sich um einen Laserstrahl handeln. Bei der Vorrichtung kann es sich insgesamt um eine Vorrichtung zur Durchführung selektiver Laserschmelzverfahren (abgekürzt SLM-Verfahren) oder selektiver Lasersinterverfahren (abgekürzt SLS-Verfahren), d. h. um eine selektive Laserschmelzvorrichtung (SLM-Vorrichtung) bzw. eine selektive Lasersintervorrichtung (SLS-Vorrichtung) handeln.

Bei dem Pulvermodul 1 kann es sich im Allgemeinen um jedwedes Pulvermodul handeln, welches zur Aufnahme und/oder Abgabe von Baumaterial eingerichtet ist. Im Besonderen kann es sich bei dem Pulvermodul 1 um ein Baumodul, in welchem der eigentliche additive Aufbau von Objekten erfolgt und welches hierfür im Rahmen der Durchführung additiver Herstellungsprozesse sukzessive schichtweise mit selektiv zu verfestigendem Baumaterial befüllt wird, um ein Dosiermodul, über welches im Rahmen der Durchführung additiver Herstellungsprozesse sukzessive schichtweise Baumaterial in eine Prozesskammer dosiert wird, oder um ein Auffangmodul, welches im Rahmen der Durchführung additiver Herstellungsprozesse mit nicht verfestigtem Baumaterial befüllt wird, handeln. Bei dem in den Fig. gezeigten Ausführungsbeispiel handelt es sich bei dem Pulvermodul 1 um ein Baumodul, wobei nachfolgende Erläuterungen nicht auf die Ausführung des Pulvermoduls 1 als Baumodul beschränkt sind.

Das Pulvermodul 1 umfasst eine Pulverkammer 2. Die Pulverkammer 2 begrenzt einen mit Baumaterial befüllbaren Pulverraum 3. Der Pulverraum 3 ist seitlich durch Wandungen (nicht näher bezeichnet) der Pulverkammer 2 begrenzt. Bodenseitig ist der Pulverraum 3 durch eine Trageinrichtung 4 begrenzt. Die Trageinrichtung ist 4 zwischen zwei Endstellungen, d. h. zwischen einer (bezogen auf die Höhe des Pulvermoduls 1) oberen und einer in Fig. 1 gezeigten unteren Endstellung relativ zu der Pulverkammer 2 bewegbar gelagert. Die bewegbare Lagerung der Trageinrichtung 4 ermöglicht die Realisierung einer, insbesondere linearen, Bewegung der Trageinrichtung 4 entlang einer vertikalen Bewegungsachse bzw. in einer vertikalen Bewegungsrichtung.

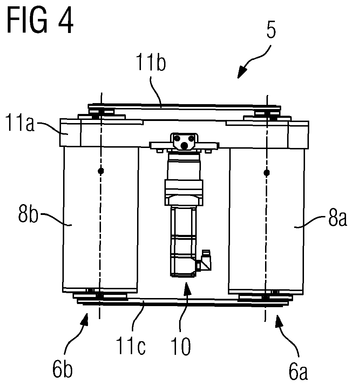

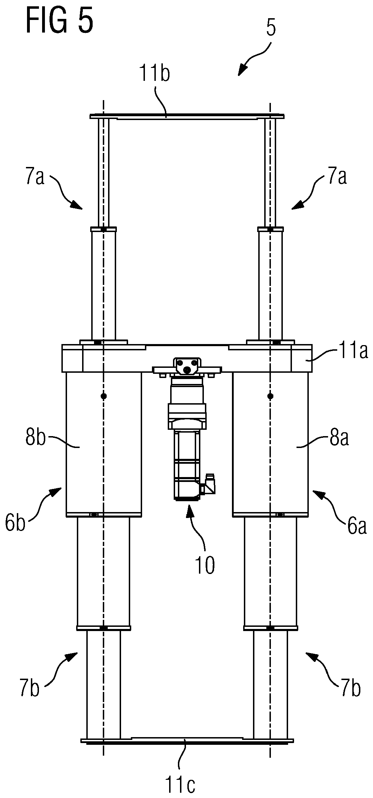

Die bewegbare Lagerung der Trageinrichtung 4 ist durch eine mit dieser gekoppelte Antriebseinrichtung 5 (vgl. auch Fig. 4, 5), realisiert. Die Antriebseinrichtung 5 ist zur Ausbildung bzw. Erzeugung einer die Trageinrichtung 4 in eine entsprechende Bewegung relativ zu der Pulverkammer 2 versetzenden Kraft (Antriebskraft) eingerichtet.

Die Antriebseinrichtung 5 umfasst zwei gesonderte (elektro)mechanische Stelleinheiten 6a, 6b, welche auch als Stellaktoren bezeichnet bzw. erachtet werden können. Anhand der Fig. 2 - 5 ist ersichtlich, dass die Stelleinheiten 6a, 6b parallel nebeneinander angeordnet sind. Jede Stelleinheit 6a, 6b umfasst zwei Stellelemente 7a, 7b. Ein jeweiliges erstes Stellelement 7a ist mit der Trageinrichtung 4 gekoppelt, ein jeweiliges zweites Stellelement 7b ist mit einer die Pulverkammer 2 lagernden Lager- oder Stützstruktur 9 des Pulvermoduls 1 gekoppelt.

Jedes Stellelement 7a, 7b ist relativ zu einem Gehäuseelement 8a, 8b der jeweiligen Stelleinheit 6a, 6b, in welchem diverse Komponenten der jeweiligen Stelleinheit 6a, 6b angeordnet sind, zwischen einer ersten Endstellung und einer zweiten Endstellung, und umgekehrt, bewegbar gelagert.

Die erste Endstellung entspricht der in Fig. 5 gezeigten, vollständig aus dem jeweiligen Gehäuseelement 8a, 8b ausgefahrenen Endstellung des jeweiligen Stellelements 7a, 7b, die zweite Endstellung entspricht der in Fig. 4 gezeigten, vollständig in das jeweilige Gehäuseelement 8a, 8b eingefahrenen Endstellung des jeweiligen Stellelements 7a, 7b. In der ersten Endstellung der Stellelemente 7a, 7b ist die Trageinrichtung 4 in ihre obere Endstellung bewegt; die erste Endstellung der Stellelemente 7a, 7b entspricht sonach der oberen Endstellung der Trageinrichtung 4. In der zweiten Endstellung des Stellelemente 7a, 7b ist die Trageinrichtung 4 in ihre untere Endstellung bewegt; die zweite Endstellung des Stellelemente 7a, 7b entspricht sonach der unteren Endstellung der Trageinrichtung 4. Ersichtlich sind die jeweiligen Stellelemente 7a, 7b einer Stelleinheit 6a, 6b in Serie geschaltet, d. h. in einer gemeinsamen (vertikalen) Achse, welche parallel zu der (vertikalen) Bewegungsachse der Trageinrichtung 4 verläuft, angeordnet und ausgerichtet.

Die Bewegungen der Stellelemente 7a, 7b sind typischerweise gleich gerichtet. Der mit einer jeweiligen Stelleinheit 6a, 6b insgesamt realisierbare Verfahrweg (Gesamthub) der Trageinrichtung 4 ergibt sich aus der Summe der vermittels der der jeweiligen Stelleinheit 6a, 6b zugehörigen Stellelemente 7a, 7b realisierbaren Teilverfahrwege (Teilhübe) zwischen deren jeweiligen ersten und zweiten Endstellungen.

Ein jeweiliges Stellelement 7a, 7b weist eine zylinderartige bzw. -förmige geometrische Grundform auf. Bei einem jeweiligen Stellelement 7a, 7b, handelt es sich in dem in den Fig. gezeigten Ausführungsbeispiel um einen Teleskopzylinder, welcher mehrere ineinander relativ zu einander bewegbar angeordnete Stellelementabschnitte (nicht näher bezeichnet) umfasst. Diese teleskopartige bzw. -förmige Ausbildung der Stellelemente 7a, 7b ist insbesondere im Hinblick auf die Realisierung vergleichsweise großer Verfahrwege (Hübe) der Trageinrichtung 4, d. h. insbesondere Verfahrwege von wenigstens 500 mm, zweckmäßig. An dieser Stelle ist anzumerken, dass der maximale Verfahrweg (Hub) der Trageinrichtung 4 zwischen 800 und 2000 mm, insbesondere zwischen 950 und 1050 mm, liegen kann.

Der Antriebseinrichtung 5 ist eine Antriebseinheit 10 zugehörig. Die als (elektrischer) Antriebsmotor ausgebildete Antriebseinheit 10 ist zur Erzeugung der die Trageinrichtung 4 in eine Bewegung relativ zu der Pulverkammer 2 versetzenden Kraft eingerichtet. Die von der Antriebseinheit 10 erzeugte Kraft wird über Kraftübertragungselemente (nicht gezeigt), d. h. z. B. Riemen, Triebe, etc., auf die jeweiligen Stelleinheiten 6a, 6b bzw. die jeweiligen stelleinheitseitigen Stellelemente 7a, 7b übertragen, um jene zwischen deren jeweiligen Endstellungen zu bewegen. Ein Beispiel für eine Anordnung entsprechender Kraftübertragungselemente sieht wenigstens einen zwischen der Antriebseinheit 10 und einem stelleinheitseitigen Stelltrieb in Form eines Gewindetriebs, insbesondere eines Spindel- bzw. Kugelgewindetriebs, geschalteten Kraftübertragungsriemen (nicht gezeigt) vor. Der Kraftübertragungsriemen ist mit der Abtriebsseite der Antriebseinheit 10 und der Antriebsseite des stelleinheitseitigen Stelltriebs gekoppelt.

Anhand der Fig. 4, 5 ist ersichtlich, dass die Stelleinheiten 6a, 6b über mehrere Querverbindungsstrukturen 11a, 11b, 11c, bei welchen es sich jeweils um einen Querträger bzw. ein Querjoch handelt, miteinander verbunden sind. Die Stelleinheiten 6a, 6b sind über eine erste Querverbindungsstruktur 11a (mittlere Querverbindungsstruktur) im Bereich eines jeweiligen stelleinheitseitigen Gehäuseelements 8a, 8b miteinander verbunden. Über eine zweite Querverbindungsstruktur 11b (obere Querverbindungsstruktur) sind die Stelleinheiten 6a, 6b im Bereich deren jeweiliger erster Stellelemente 7a, insbesondere im Bereich deren jeweiliger freier Enden, miteinander verbunden. Die zweite Querverbindungsstruktur 11b bildet gleichermaßen eine Ankopplungsstruktur zur Kopplung der Antriebseinrichtung 5 mit der Trageinrichtung 4. Über eine dritte Querverbindungsstruktur 11c sind die Stelleinheiten 6a, 6b im Bereich deren jeweiliger zweiter Stellelemente 7b, insbesondere im Bereich deren freier Enden, miteinander verbunden. Die dritte Querverbindungsstruktur 11c bildet gleichermaßen eine Ankopplungsstruktur zur Kopplung der Antriebseinrichtung 5 mit der die Pulverkammer 2 lagernden Lagerstruktur 9.

Ersichtlich bildet die erste Querverbindungsstruktur 11a eine Möglichkeit für eine kompakte Anordnung der Antriebseinheit 10; die Antriebseinheit 10 ist, insbesondere mittig, zwischen den wenigstens zwei Stelleinheiten 6a, 6b, an der ersten Querverbindungsstruktur 11a angeordnet. Wenigstens die erste Querverbindungsstruktur 11a kann zumindest abschnittsweise hohl ausgebildet sein, sodass diese zur Aufnahme der erwähnten Kraftübertragungselemente eingerichtet ist.

Zur Abdichtung der Antriebseinrichtung 10, insbesondere gegenüber dem Eindringen von Baumaterial, umfasst das Pulvermodul 1 ein in einer vertikalen Richtung verlängerbares, insbesondere faltenbalgartig ausgebildetes, Dichtelement 12. Das Dichtelement 12 ist sich in vertikaler Richtung zwischen der Trageinrichtung 4 und der Pulverkammer 2 bzw. einem bodenseitig an der Pulverkammer 2 ansetzenden Pulverkammeranschlussbauteil 13 angeordnet. Bei dem Pulverkammeranschlussbauteil 13 handelt es sich in dem in den Fig. gezeigten Ausführungsbeispiel um ein Aufnahmeelement, welches einen zur Aufnahme von Baumaterial eingerichteten, eine Strömungskanalstruktur umfassenden Aufnahmebereich begrenzt.

Das Pulvermodul 1 weist mehrere Komponenten auf, welche im Betrieb mit Daten und/oder Energie zu versorgen sind. Zu entsprechenden Komponenten zählen beispielsweise die Antriebseinheit 10 sowie die Trageinrichtung 4, d. h. insbesondere ein einen Bestandteil der Trageinrichtung 4 bildender plattenartiger Heizkörper 14. Entsprechend umfasst das Pulvermodul 1 Daten- und/oder Versorgungsleitungen (nicht näher bezeichnet) zur datenmäßigen und/oder elektrischen Versorgung von datenmäßig und/oder elektrisch zu versorgenden Komponenten des Pulvermoduls 1. Über entsprechende Versorgungsleitungen können je nach konkreter Ausgestaltung (elektrische) Energie und/oder Daten, wobei es sich insbesondere um Steuersignale bzw. -parameter handelt, geleitet werden.

Die Versorgungsleitungen sind in jeweils mehrere, insbesondere gelenkig, miteinander verbundene Führungselemente (nicht näher bezeichnet) umfassenden, kettenartigen Führungseinrichtungen 15a, 15b geführt angeordnet. Bei den Führungseinrichtungen 15a, 15b handelt es sich jeweils um eine mehrgliedrige, offen oder geschlossen ausgeführte längliche Energiekette. Die Führungseinrichtungen 15a, 15b sind in Fig. 2 nicht dargestellt, um die parallel Anordnung der Stelleinheiten 6a, 6b besser zu veranschaulichen.

Anhand von Fig. 1 ist ersichtlich, dass eine erste Führungseinrichtung 15a über einen (oberen) ersten Befestigungsbereich (nicht näher bezeichnet) an der Trageinrichtung 4 und über einen (unteren) zweiten Befestigungsbereich (nicht näher bezeichnet) an einer an einem unbeweglichen Teil des Pulvermoduls 1, d. h. an einer an einem unbeweglichen Teil des Pulvermoduls 1 angeordneten, plattenartigen bzw. -förmigen Tragstruktur 16a, befestigt ist. Die erste Führungseinrichtung 15a erstreckt sich zumindest in einer Grundstellung zickzackartig zwischen dem ersten Befestigungsbereich und dem zweiten Befestigungsbereich (vgl. Fig. 3). Eine zweite Führungseinrichtung 15b ist über einen ersten Befestigungsbereich (nicht näher bezeichnet) an der Antriebseinrichtung 5 und über einen zweiten Befestigungsbereich (nicht näher bezeichnet) ebenso an einer an einem unbeweglichen Teil des Pulvermoduls 1, d. h. an einer an einem unbeweglichen Teil des Pulvermoduls 1 angeordneten, plattenartigen bzw. -förmigen Tragstruktur 16b, befestigt. Die zweite Führungseinrichtung 15b erstreckt sich - analog der ersten Führungseinrichtung 15a - zumindest in einer Grundstellung zickzackartig zwischen dem ersten Befestigungsbereich und dem zweiten Befestigungsbereich. Die jeweiligen Grundstellungen entsprechen der unteren Endstellung der Trageinrichtung 4. Bei dem unbeweglichen Teil des Pulvermoduls 1 handelt es sich jeweils um die die Pulverkammer 2 lagernde Lagerstruktur 9.

Es wurde erwähnt, dass der maximale Verfahrweg (Hub) der Trageinrichtung 4 zwischen 800 und 2000 mm, insbesondere zwischen 950 und 1050 mm, liegen kann. Entsprechend große Hübe der Trageinrichtung 4 erfordern eine entsprechende hoch ausgebildete Pulverkammer 2. Hierzu kann die Pulverkammer 2 bzw. ein den Pulverraum 3 begrenzender Pulverkammergrundkörper (nicht näher bezeichnet) in mehrere unter Ausbildung des Pulverkammergrundkörpers aneinander befestigbare oder befestigte Pulverkammergrundkörpersegmente 2a, 2b segmentiert ausgebildet sein (vgl. Fig. 1). Durch stapelartige Anordnung jeweiliger Pulverkammergrundkörpersegmente 2a, 2b können prinzipiell beliebig hohe Pulverkammern 2 und sonach beliebig hohe Bauhöhen realisiert werden. Die Segmentierung der Pulverkammer 2 bzw. des Pulverkammergrundkörpers stellt, wie erwähnt, eine optionale Ausgestaltung der Pulverkammer 2 dar.

## Patentansprüche

1. Pulvermodul (1) für eine Vorrichtung zur additiven Herstellung dreidimensionaler Objekte, umfassend:
eine einen mit pulverförmigem Baumaterial befüllbaren Pulverraum (3) begrenzende Pulverkammer (2),
eine in dem Pulverraum (3) angeordnete, den Pulverraum (3) bodenseitig begrenzende, relativ zu der Pulverkammer (2) bewegbar gelagerte Trageinrichtung (4) sowie
eine Antriebseinrichtung (5) zur Erzeugung einer die Trageinrichtung (4) in eine Bewegung relativ zu der Pulverkammer (2) versetzenden Kraft, wobei die Antriebseinrichtung (5) wenigstens zwei, insbesondere bewegungskoppelbare oder -gekoppelte, gesonderte Stelleinheiten (6a, 6b) mit jeweils wenigstens einem, insbesondere zylinderartigen, Stellelement (7a, 7b) umfasst, wobei jedes Stellelement (7a, 7b) relativ zu einem jeweiligen Gehäuseelement (8a, 8b) der jeweiligen Stelleinheit (6a, 6b) zwischen einer ersten Endstellung und einer zweiten Endstellung bewegbar gelagert ist,
**dadurch gekennzeichnet, dass** jede Stelleinheit (6a, 6b) wenigstens ein zwischen einer ersten Endstellung und einer zweiten Endstellung bewegbar gelagertes, insbesondere teleskopartiges, erstes Stellelement (7a) und wenigstens ein zwischen einer ersten Endstellung und einer zweiten Endstellung bewegbar gelagertes, insbesondere teleskopartiges, zweites Stellelement (7b) umfasst, wobei die Stellelemente (7a, 7b) einer Stelleinheit (6a, 6b) in Serie geschaltet sind.

2. Pulvermodul nach Anspruch 1, **dadurch gekennzeichnet, dass** ein jeweiliges erstes Stellelement (7a) mit der Trageinrichtung (4) koppelbar oder gekoppelt ist und ein jeweiliges zweites Stellelement (7b) mit einer die Pulverkammer (2) lagernden, insbesondere rahmenartigen, Lagerstruktur (9) des Pulvermoduls (1) koppelbar oder gekoppelt ist.

3. Pulvermodul nach einem der vorhergehenden Ansprüche, **dadurch gekennzeichnet, dass** die Antriebseinrichtung (5) wenigstens eine den Stelleinheiten (6a, 6b) zugeordnete, motorische Antriebseinheit (10) zur Erzeugung der die Trageinrichtung (4) in eine Bewegung relativ zu der Pulverkammer (2) versetzenden Kraft umfasst.

4. Pulvermodul nach einem der vorhergehenden Ansprüche, **dadurch gekennzeichnet, dass** die wenigstens zwei Stelleinheiten (6a, 6b) parallel nebeneinander angeordnet und über wenigstens eine Querverbindungsstruktur (11a - 11c), insbesondere im Bereich eines jeweiligen stelleinheitseitigen Gehäuseelements (8a - 8c), miteinander verbunden sind, wobei die Antriebseinheit (10), insbesondere mittig zwischen den wenigstens zwei Stelleinheiten (6a, 6b), an der Querverbindungsstruktur (11a) angeordnet ist.

5. Pulvermodul nach Anspruch 4, **dadurch gekennzeichnet, dass** die wenigstens zwei Stelleinheiten (6a, 6b) über wenigstens eine erste Querverbindungsstruktur (11a) im Bereich eines jeweiligen stelleinheitseitigen Gehäuseelements (8a, 8b) miteinander verbunden sind und über eine zweite Querverbindungsstruktur (11b) im Bereich deren jeweiliger erster oder zweiter Stellelemente (7a, 7b) sowie gegebenenfalls über eine dritte Querverbindungsstruktur (11c) im Bereich deren jeweiliger zweiter oder erster Stellelemente (7a, 7b) miteinander verbunden sind.

6. Pulvermodul nach einem der vorhergehenden Ansprüche, **gekennzeichnet durch** wenigstens eine wenigstens eine Daten- und/oder Versorgungsleitung zur, insbesondere datenmäßigen und/oder elektrischen, Versorgung von, insbesondere datenmäßig und/oder elektrisch, zu versorgenden Komponenten des Pulvermoduls, insbesondere der Trageinrichtung (4) und/oder der Antriebseinrichtung (5), wobei die Versorgungsleitungen in einer mehrere, insbesondere gelenkig, miteinander verbundene Führungselemente umfassenden, insbesondere kettenartigen, Führungseinrichtung (15a, 15b) geführt angeordnet sind.

7. Pulvermodul nach Anspruch 6, **gekennzeichnet durch** mehrere Führungseinrichtungen (15a, 15b), wobei eine erste Führungseinrichtung (15a) über einen ersten Befestigungsbereich an der Trageinrichtung (4) und über einen zweiten Befestigungsbereich an einer an einem unbeweglichen Teil des Pulvermoduls (1), insbesondere an einer an einem unbeweglichen Teil des Pulvermoduls (1) angeordneten Tragstruktur (16a), befestigt ist, wobei sich die erste Führungseinrichtung (15a) zumindest in einer Grundstellung zickzackartig zwischen dem ersten Befestigungsbereich und dem zweiten Befestigungsbereich erstreckt, und
eine zweite Führungseinrichtung (15b) über einen ersten Befestigungsbereich an der Antriebseinrichtung (5) und über einen zweiten Befestigungsbereich an einer an einem unbeweglichen Teil des Pulvermoduls (1), insbesondere an einer an einem unbeweglichen Teil des Pulvermoduls (1) angeordneten Tragstruktur (16a), befestigt ist, wobei sich die zweite Führungseinrichtung (15a) zumindest in einer Grundstellung zickzackartig zwischen dem ersten Befestigungsbereich und dem zweiten Befestigungsbereich erstreckt.

8. Pulvermodul nach einem der vorhergehenden Ansprüche, **gekennzeichnet durch** ein in wenigstens einer Richtung verlängerbares, insbesondere faltenbalgartig ausgebildetes, Dichtelement (12), welches sich in vertikaler Richtung zwischen der Trageinrichtung (4) und der Pulverkammer (2) oder einem bodenseitig an der Pulverkammer (2) ansetzenden Pulverkammeranschlussbauteil (13) angeordnet oder ausgebildet ist.

9. Pulvermodul nach einem der vorhergehenden Ansprüche, **dadurch gekennzeichnet, dass** der maximale Verfahrweg der Trageinrichtung (4) zwischen 800 und 2000 mm, insbesondere zwischen 950 und 1050 mm, liegt.

10. Pulvermodul nach einem der vorhergehenden Ansprüche, **dadurch gekennzeichnet, dass** die Pulverkammer (2) einen Pulverkammergrundkörper umfasst, welcher den Pulverraum (3) begrenzt, wobei der Pulverkammergrundkörper in mehrere unter Ausbildung des Pulverkammergrundkörpers aneinander befestigbare oder befestigte Pulverkammergrundkörpersegmente (2a, 2b) segmentiert ausgebildet ist.

11. Vorrichtung zur additiven Herstellung dreidimensionaler Objekte, **gekennzeichnet durch** wenigstens ein Pulvermodul (1) nach einem der vorhergehenden Ansprüche.

## Claims

1. A powder module (1) for an apparatus for additive manufacturing of three-dimensional objects, comprising:
a powder chamber (2) that delimits a powder room (3) that is fillable with powdered building material,
a carrier device (4) that is situated in the powder room (3) and that delimits the powder room (3) at the bottom, and that is supported so as to be movable relative to the powder chamber (2), and
a drive device (5) for generating a force that sets the carrier device (4) in motion relative to the powder chamber (2), wherein
the drive device (5) includes at least two separate actuator units (6a, 6b) that are in particular coupled or coupleable in terms of movement, each having at least one, in particular cylindrical, actuator element (7a, 7b), wherein each actuator element (7a, 7b) is supported so as to be movable, relative to a respective housing element (8a, 8b) of the particular actuator unit (6a, 6b), between a first end position and a second end position, **characterized in that** each actuator unit (6a, 6b) includes at least one first actuator element (7a) that is supported, in particular in a telescoping manner, so as to be movable between a first end position and a second end position, and at least one second actuator element (7b) that is supported, in particular in a telescoping manner, so as to be movable between a first end position and a second end position, wherein the actuator elements (7a, 7b) of an actuator unit (6a, 6b) are connected in series.

2. The powder module according to Claim 1, **characterized in that** a respective first actuator element (7a) is coupled or coupleable to the carrier device (4), and a respective second actuator element (7b) is coupled or coupleable to a support structure (9) of the powder module (1) that supports the powder chamber (2), in particular in a frame-like manner.

3. The powder module according to one of the preceding claims, **characterized in that** the drive device (5) includes at least one motorized drive unit (10), associated with the actuator units (6a, 6b), for generating the force that sets the carrier device (4) in motion relative to the powder chamber (2).

4. The powder module according to one of the preceding claims, **characterized in that** the at least two actuator units (6a, 6b) are situated in parallel to one another and are connected to one another via at least one cross connection structure (11a-11c), in particular in the area of a respective housing element (8a-8c) on the actuator unit side, wherein the drive unit (10), is situated, in particular centrally, on the cross connection structure (11a) between the at least two actuator units (6a, 6b).

5. The powder module according to Claim 4, **characterized in that** the at least two actuator units (6a, 6b) are connected to one another via at least one first cross connection structure (11a) in the area of a respective housing element (8a, 8b) on the actuator unit side, and are connected to one another via a second cross connection structure (11b) in the area of their respective first or second actuator elements (7a, 7b), and optionally via a third cross connection structure (11c) in the area of their respective first or second actuator elements (7a, 7b).

6. The powder module according to one of the preceding claims, **characterized by** at least one data and/or supply line for supplying data and/or electrical power to components of the powder module to be supplied with data and/or electrical power, in particular the carrier device (4) and/or the drive device (5), wherein the supply lines are arranged so as to be guided in an in particular chain-like guide device (15a, 15b) that includes multiple guide elements that are connected to one another, in particular in an articulated manner.

7. The powder module according to Claim 6, **characterized by** multiple guide devices (15a, 15b), wherein a first guide device (15a) is fastened via a first fastening area to the carrier device (4), and via a second fastening area is fastened to an immovable portion of the powder module (1), in particular to a support structure (16a) situated on an immovable portion of the powder module (1), wherein the first guide device (15a), at least in a normal position, extends between the first fastening area and the second fastening area in a zigzag manner, and
a second guide device (15b) is fastened via a first fastening area to the drive device (5), and via a second fastening area is fastened to an immovable portion of the powder module (1), in particular to a support structure (16a) situated on an immovable portion of the powder module (1), wherein the second guide device (15a), at least in a normal position, extends between the first fastening area and the second fastening area in a zigzag manner.

8. The powder module according to one of the preceding claims, **characterized by** a sealing element (12) that is extendable in at least one direction, in particular in a bellows-like manner, and that is situated or provided in the vertical direction between the carrier device (4) and the powder chamber (2), or a powder chamber connecting part (13) resting on the powder chamber (2) on the bottom side.

9. The powder module according to one of the preceding claims, **characterized in that** the maximum travel path of the carrier device (4) is between 800 and 2000 mm, in particular between 950 and 1050 mm.

10. The powder module according to one of the preceding claims, **characterized in that** the powder chamber (2) includes a powder chamber base body that delimits the powder room (3), wherein the powder chamber base body has a design that is segmented into multiple powder chamber base body segments (2a, 2b) that are fastened or fastenable to one another to form the powder chamber base body.

11. An apparatus for additive manufacturing of three-dimensional objects, **characterized by** at least one powder module (1) according to one of the preceding claims.

## Revendications

1. Bloc de poudre (1) pour un dispositif de fabrication additive d'objets tridimensionnels, comprenant :
un compartiment à poudre (2) délimitant un espace à poudre (3) pouvant être rempli avec un matériau de construction poudreux,
un dispositif de support (4) disposé dans l'espace à poudre (3), délimitant l'espace à poudre (3) côté fond et monté mobile par rapport au compartiment à poudre (2), et
un dispositif d'entraînement (5) pour générer une force pour mettre le dispositif de support (4) en mouvement par rapport au compartiment à poudre (2), dans lequel
le dispositif d'entraînement (5) comprend au moins deux unités d'actionnement (6a, 6b) séparées, en particulier pouvant être ou étant couplées en mouvement, avec respectivement au moins un élément d'actionnement (7a, 7b), en particulier cylindrique, chaque élément d'actionnement (7a, 7b) étant monté mobile entre une première position d'extrémité et une deuxième position d'extrémité par rapport à un élément de boîtier (8a, 8b) respectif de l'unité d'actionnement (6a, 6b) respective,
**caractérisé en ce que** chaque unité d'actionnement (6a, 6b) comprend au moins un premier élément d'actionnement (7a), en particulier télescopique, monté mobile entre une première position d'extrémité et une deuxième position d'extrémité, et au moins un deuxième élément d'actionnement (7b), en particulier télescopique, monté mobile entre une première position d'extrémité et une deuxième position d'extrémité, les éléments d'actionnement (7a, 7b) d'une unité d'actionnement (6a, 6b) étant connectés en série.

2. Bloc de poudre selon la revendication 1, **caractérisé en ce qu'**un premier élément d'actionnement (7a) respectif peut être ou est couplé au dispositif de support (4), et un deuxième élément d'actionnement (7b) respectif peut être ou est couplé à une structure de logement (9), en particulier de type cadre et logeant le compartiment à poudre (2), du bloc de poudre (1).

3. Bloc de poudre selon l'une quelconque des revendications précédentes, **caractérisé en ce que** le dispositif d'entraînement (5) comprend au moins une unité d'entraînement à moteur (10) attribuée aux unités d'actionnement (6a, 6b) pour générer la force mettant le dispositif de support (4) en mouvement par rapport au compartiment à poudre (2).

4. Bloc de poudre selon l'une quelconque des revendications précédentes, **caractérisé en ce que** lesdites au moins deux unités d'actionnement (6a, 6b) sont disposées en parallèle l'une à côté de l'autre et sont reliées par au moins une structure de liaison transversale (11a à 11c), en particulier au niveau d'un élément de boîtier (8a à 8c) respectif, côté unité d'actionnement, l'unité d'entraînement (10) étant disposée sur la structure de liaison transversale (11a), en particulier au centre entre lesdites au moins deux unités d'actionnement (6a, 6b).

5. Bloc de poudre selon la revendication 4, **caractérisé en ce que** lesdites au moins deux unités d'actionnement (6a, 6b) sont reliées entre elles par au moins une première structure de liaison transversale (11a) au niveau de chaque élément de boîtier (8a, 8b) respectif, côté unité d'actionnement, et sont reliées entre elles par au moins une deuxième structure de liaison transversale (11b) au niveau des premier et deuxième éléments d'actionnement (7a, 7b) respectifs de celle-ci, ainsi que le cas échéant, par une troisième structure de liaison transversale (11c) au niveau des deuxièmes ou premiers éléments d'actionnement (7a, 7b) respectifs de celle-ci.

6. Bloc de poudre selon l'une quelconque des revendications précédentes, **caractérisé par** au moins une ligne de données et/ou d'alimentation, destinée(s) à l'alimentation de composants du bloc de poudre, en particulier du dispositif de support (4) et/ou du dispositif d'entraînement (5), à alimenter en particulier en données et/ou en électricité, dans lequel les lignes d'alimentation sont disposées en étant guidées dans un dispositif de guidage (15a, 15b), en particulier de type chaîne, comprenant plusieurs éléments de guidage reliés entre eux, en particulier de manière articulée.

7. Bloc de poudre selon la revendication 6, **caractérisé par** plusieurs dispositifs de guidage (15a, 15b), dans lequel
un premier dispositif de guidage (15a) est fixé au dispositif de support (4) par l'intermédiaire d'une première zone de fixation et à une partie fixe du bloc de poudre (1), en particulier à une structure de support (16a) disposée sur une partie fixe du bloc de poudre (1), par l'intermédiaire d'une deuxième zone de fixation, le premier dispositif de guidage (15a) s'étendant au moins dans une position de base en zigzag entre la première zone de fixation et la deuxième zone de fixation, et
un deuxième dispositif de guidage (15b) est fixé au dispositif d'entraînement (5) par l'intermédiaire d'une première zone de fixation et à une partie fixe du bloc de poudre (1), en particulier à une structure de support (16a) disposée sur une partie fixe du bloc de poudre (1), par l'intermédiaire d'une deuxième zone de fixation, le deuxième dispositif de guidage (15b) s'étendant au moins dans une position de base en zigzag entre la première zone de fixation et la deuxième zone de fixation.

8. Bloc de poudre selon l'une quelconque des revendications précédentes, **caractérisé par** un élément d'étanchéité (12) extensible dans au moins une direction, en particulier réalisé sous forme de soufflet, disposé ou réalisé dans la direction verticale entre le dispositif de support (4) et le compartiment à poudre (2) ou un composant de raccordement au compartiment à poudre (13) attaquant au compartiment à poudre.

9. Bloc de poudre selon l'une quelconque des revendications précédentes, **caractérisé en ce que** le déplacement maximal du dispositif de support (4) est compris entre 800 et 2000 mm, en particulier entre 950 et 1050 mm.

10. Bloc de poudre selon l'une quelconque des revendications précédentes, **caractérisé en ce que** le compartiment à poudre (2) comprend un corps de base de compartiment à poudre délimitant l'espace à poudre (3), le corps de base de compartiment à poudre étant réalisé en étant segmenté en plusieurs segments de corps de base de compartiment à poudre (2a, 2b) pouvant être ou étant fixés les uns aux autres en réalisant le corps de base de compartiment à poudre.

11. Dispositif de fabrication additive d'objets tridimensionnels, **caractérisé par** au moins un bloc de poudre (1) selon l'une quelconque des revendications précédentes.
